# EUROPÄISCHE PATENTSCHRIFT

(11) **EP 0 823 033 B1**
(45) Veröffentlichungstag und Bekanntmachung des Hinweises auf die Patenterteilung: **24.11.1999**
(21) Anmeldenummer: 96914163.9
(22) Anmeldetag: 02.05.1996
(51) Int. Cl.: F16L 27/08, F16C 19/18

(54) **DREHKUPPLUNG**
ROTATING JOINT
JOINT TOURNANT

(30) Priorität: 05.05.1995 DE 19516115
(43) Veröffentlichungstag der Anmeldung: 11.02.1998
(73) Patentinhaber: Stolco Stoltenberg-Lerche GmbH & Co. KG, 40212 Düsseldorf (DE)
(72) Erfinder: GAU, Günter, D-42111 Wuppertal (DE); SEELBACH, Jochen, D-40479 Düsseldorf (DE)
(74) Vertreter: COHAUSZ HANNIG DAWIDOWICZ & PARTNER
(86) Internationale Anmeldenummer: EP9601816
(87) Internationale Veröffentlichungsnummer: WO9635070

(56) Entgegenhaltungen:
- DE-A- 1 475 684
- DE-A- 4 419 524
- GB-A- 833 179
- US-A- 4 215 907

## Beschreibung

Die Erfindung betrifft eine Drehkupplung für Druckleitungen nach dem Oberbegriff von Anspruch 1.

Beim Anschluß eines Schlauches an eine Leitung tritt das Problem auf, daß der Schlauch bei Gebrauch verdrillt wird und die Windungen im Mantel verbleiben. Herkömmliche Schlauchkupplungen, wie sie beispielsweise aus DE 14 25 564 bekannt sind, ermöglichen nicht die eigenständige Entdrillung des Schlauches durch Drehung in der Kupplung. Bei derartigen Kupplungen wird auf den Schlauch eine Tülle aufgesteckt, die ihrerseits als Steckteil in ein Aufnahmeteil eingeschoben wird. Oft sind Steckteil und Aufnahmeteil mittels eines Schnellverschlusses verbunden, der Sperrkörper in Form von Kugeln aufweist. Aufgrund der Führung durch die Kugeln ist unter großer Kraftaufwendung eine Drehung des Schlauches in der Kupplung möglich.

Zwar ist ein einfacher Schlauch, beispielsweise ein Wasserschlauch, dessen Mantel aus elastischem Material gefertigt ist, nicht sonderlich empfindlich auf Windungen im Mantel. Schläuche, die von Medien unter hohem Druck durchströmt werden, sind jedoch meist von einem umhüllenden Metallschlauch umgeben. Bei solchen Druckschläuchen können eingedrehte Windungen leicht zur Zerstörung der Umhüllung führen. Es ist daher gerade bei Druckschläuchen angezeigt, sie über drehfähige Kupplungen an Leitungen anzuschließen.

Eine einfache Form der drehbaren Schlauchverschraubung für Druckschläuche ist aus DE OS 27 11 584 bekannt. Damit beispielsweise die Drehbewegungen eines angeschlossenen Handgerätes nicht auf den Schlauch übertragen wird, ist die Tülle mit einem Führungsansatz versehen, der in einem Schraubansatz drehbar gelagert ist. Der Führungsansatz ist dabei mit einem O-Ring abgedichtet. Diese Form der drehbaren Schlauchverschraubung hält hohen Drücken nur bedingt stand und ist deshalb für den Gebrauch ungeeignet. Außerdem versagt die Drehverbindung mittels des Gleitlagers, wenn es beim Durchgang heißer Medien zur unterschiedlichen Ausdehnung der einzelnen Bauteile kommt, da die Reibung im Gleitlager zunimmt.

Aus DE-OS 14 75 684 ist eine Drehverbindung für Flüssigkeitsleitungen mit einem ortsfesten und einem darum dreh- oder schwenkbaren Anschlußteil bekannt, bei der ein Wälzlager zwischen den Teilen das reibungsarme Drehen gewährleistet. Diese Drehverbindung ist insbesondere dafür geeignet, unter Druck stehende Schmierflüssigkeiten schnell rotierenden Wellen zuzuführen. Um die sichere Rotation zu gewährleisten, ist die rotierende Welle durch ein zweireihiges Schrägkugellager und eine Bohrung geführt. Die Montage der einzelnen Bauteile und deren exakte Ausrichtung ist sehr aufwendig. Da der Hohlzapfen des Anschlußteiles verhältnismäßig lang und von geringem Durchmesser ist, kann die Wärme beim Durchgang heißer Medien insbesondere von Dampf schlecht abgeführt werden. Die Bauteile dehnen sich unterschiedlich stark aus und verklemmen. Für die sichere Kupplung von Dampfdruckschläuchen ist diese Drehverbindung daher nicht geeignet.

Die gattungsbildende US-A-4215907 offenbart verschiedene Anordnungen von Kugellagern. Der gesamte Druck lastet dabei auf einem dünnen Ring, dessen Montage schwierig ist und der nicht als Sicherungsring anerkannt wird.

Aufgabe der Erfindung ist es, eine einfach zu montierende und unter extremen Bedingungen zuverlässig arbeitende Drehkupplung zu schaffen, mit der ein insbesondere Dampf durchströmter Druckschlauch drehbar an eine Leitung angeschlossen werden kann.

Diese Aufgabe wird durch eine Drehkupplung mit den Merkmalen des Anspruchs 1 gelöst.

Durch die paarweise in X-Anordnung zusammengefaßten Lager, die mittels einer Feder insbesondere einer Tellerfeder elastisch angestellt sind, ist eine automatische Zentrierung des Steckteiles im Aufnahmeteil gegeben. Der Einsatz von Tellerfedern sorgt zudem für den Ausgleich eventueller Fertigungstoleranzen. Die erfindungsgemäße Drehkupplung gewährleistet insofern eine einfache Montage des Druckschlauches, als nicht mehr auf die Ausrichtung der einzelnen Bauteile gegeneinander geachtet werden braucht. Gleichzeitig wirkt sich eine unterschiedliche Ausdehnung der Bauteile bei ungleichmäßiger Erwärmung nicht nachteilig auf die Funktion der Drehkupplung aus. Es kann zudem in einer vorteilhaften Ausführungsform auf den Einsatz von Kugelkäfigen verzichtet werden. Vorteilhafterweise sind die Bauteile der Drehkupplung aus rost- säurebeständigem VA-Stahl und die Kugeln aus Wälzlagerstahl gefertigt. Für die Bauteile werden vorteilhafterweise Werkstoffe nach der Deutschen Industrie Norm 3339 eingesetzt.

Die Drehkupplung wird vorteilhafterweise als Verbindungsarmatur zwischen Dampf-, Heißwasserschläuchen und/oder Sprühlanzen oder zwischen dem festen Anschluß und dem Schlauch eingesetzt. Das Steckteil ist in einer besonderen Ausführungsform ein Gußteil, das an seiner Oberfläche Ausformungen aufweist. Diese Ausformungen sind insofern vorteilhaft, als die damit erreichte einheitliche Wandstärke des Steckteiles zu seiner gleichmäßigen Ausdehnung beim Erhitzen beiträgt, so daß ein Verklemmen in der Führung vermieden wird. Die Ausformungen vergrößern die Oberfläche, so daß eine gute Wärmeabfuhr gewährleistet ist. Außerdem helfen die Ausformungen Material einzusparen.

Zusammen mit der elastischen Anstellung des Kugellagers ist die Drehkupplung somit besonders geeignet um Schläuche zu koppeln, die Dampf unter hohen Temperaturen und Drücken führen. Die Drehkupplung gewährleistet einen sicheren Anschluß von Druckschläuchen, die von Dampf mit 18 bar und von 210°C beaufschlagt werden. Damit erfüllt sie die in der Deutschen Industrienorm für Dampfschläuche und deren Armaturen (DIN 2825 und DIN 2826) gestellten Anforderungen.

Besonders vorteilhaft an der Drehkupplung ist, daß bei einem Versagen der elastischen Lagerung die Druckfestigkeit und Dichtigkeit erhalten bleibt, da das Steckteil an der Gehäusekante zur Auflage kommt und nicht aus dem Aufnahmeteil rutscht. Falls zudem die Dichtungen zwischen dem Steckteil und dem Aufnahmeteil reißen und die Kugeln der Lager von aggressiven Medien beschädigt werden, ist wegen des aufgeschraubten Gehäuses die Festigkeit der Drehkupplung gewährleistet und ein Platzen der Verbindung ausgeschlossen. In einem derartigen Fall dient der Raum zwischen den zusammengesteckten Teilen und dem Gehäuse als Druckraum, der zwar nicht absolut dicht aber mechanisch fest verschlossen bleibt. Das Gehäuse ist so ausgelegt, daß der bei einer Leckage entstehende Druckraum der Belastung standhält. In diesem Druckraum kondensiert der Dampf und tritt als Wasser auf der dem Anwender abgewandten Seite aus.

Es ist besonders vorteilhaft, die Nuten im Steckteil, in denen die Kugeln laufen, so auszubilden, daß ihre eine Wandung in der Achse der Drehkupplung liegt während die andere Achse mit einem Winkel von insbesondere 15° zur Senkrechten angestellt ist. Der daraus resultierende relativ große Öffnungswinkel der Nuten von 75° vereinfacht deren Herstellung und wirkt sich damit positiv auf die Herstellungskosten aus. Durch die achsparallele Wandung ist zudem eine einfache Montage der Kugeln gewährleistet.

Bei dem Öffnungswinkel einer Nut von etwa 75° ist für einen sicheren Halt der Kugeln gesorgt. Die Gefahr des Verklemmens eines Kugellagers kann damit minimiert werden.

Da es beim Durchfluß heißer Medien insbesondere von Dampf zur extremen Erhitzung der Drehkupplung kommt, ist die Drehkupplung in einer vorteilhaften Ausführungsform mit einem Berührungsschutz versehen. Durch den Berührungsschutz ist ein gefahrloses Handhaben der Drehkupplung jederzeit möglich. Um den Wärmeübergang und damit das Aufheizen des Berührungsschutzes zu verringern, ist es vorteilhaft, ihn auf kleiner Auflagefläche am Aufnahmeteil anzuschweißen.

Die erfindungsgemäße Drehkupplung zeichnet sich außerdem dadurch aus, daß bei einer Zerstörung der inneren, zwischen dem Aufnahmeteil und dem Steckteil angeordneten Dichtung das Medium nicht bzw. nur zu einem sehr geringen Teil aus der Drehkupplung austreten kann. Der Austritt wird durch eine zusätzliche Dichtung zwischen dem Steckteil und dem Gehäuse der Drehkupplung verhindert.

Vorteilhaft ist außerdem, daß selbst bei einer Beschädigung der Kugeln die Funktion der Drehkupplung gesichert bleibt, da eine Kante des Gehäuses als Anlage für das Steckteils dient. Dadurch ist das Steckteil sicher im Gehäuse geführt und kann trotz Beeinträchtigung des Kugellagers gedreht werden.

Die erfindungsgemäße Drehkupplung gewährleistet unter extremen Bedingungen die Dichtheit, Bauteilfestigkeit und Drehbarkeit.

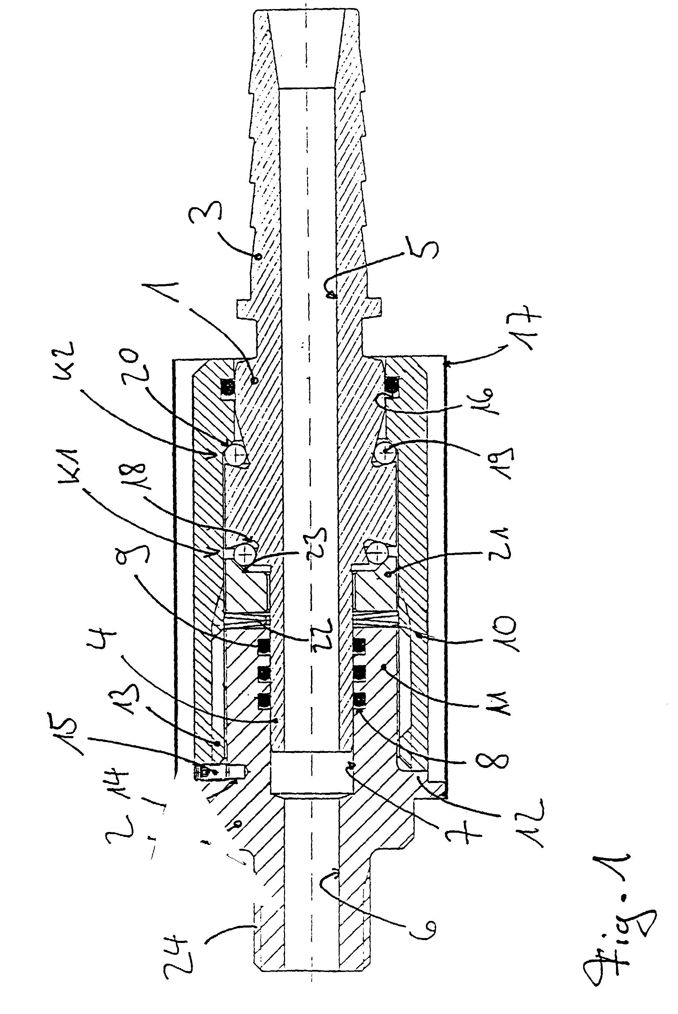

Ausführungsbeispiele der Erfindung sind in den Zeichnungen dargestellt und werden im folgenden näher beschrieben. Es zeigen
- **Figur 1**: eine Drehkupplung,
- **Figur 2**: eine Drehkupplung mit Nuten größerer Öffnung.

In der Zeichnung 1 ist eine Drehkupplung dargestellt, durch die ein Steckteil 1 mit einem Aufnahmeteil 2 drehbar verbunden ist. Sowohl Steckteil 1 als auch Aufnahmeteil 2 sind rotationssymmetrisch und weisen jeweils eine Bohrung 5 und 6 auf die sich im Durchmesser gleichen. Zwischen dem Aufnahmeteil 2 und dem Steckteil sind zwei Schrägkugellager K1 und K2 angebracht.

Das Steckteil 1 ist mit einer Schlauchtülle 3 versehen, auf die ein nicht dargestellter Druckschlauch aufschiebbar und insbesondere mit nicht dargestellten Klemmschalenpaaren festsetzbar ist. Das Steckteil 1 ist an seiner der Tülle 3 abgewandten Seite zu einem Hohlzapfen 4 geformt, der in eine Bohrung 7 des Aufnahmeteils hineinragt. In die Bohrung 7 sind Nuten 8 eingedreht, die zur Aufnahme von Dichtringen 9 dienen. Das Steckteil 1 ist somit dicht und drehbar im Aufnahmeteil 2 geführt. Das Aufnahmeteil 2 ist zum Anschluß an Armaturen mit einem genormten Gewinde 24 versehen.

Das Steckteil 1 und das Aufnahmeteil 2 sind im montierten Zustand von einem Gehäuse 10 umgeben. Das Gehäuse 10 ist mit einer Seite über einen zylindrischen Stutzen 11 des Aufnahmeteiles 2 geschoben bzw. aufgeschraubt und schließt mit einem daran angeformten Ansatz 12 bündig ab. Der innere Rand des Gehäuses 10 ist mit einem Gewinde 13 versehen mit dem das Gehäuse 10 auf dem Stutzen 11 aufgeschraubt ist. Mit seiner anderen Seite nimmt das Gehäuse 10 das Steckteil 1 mit der Lagerung auf und haltert das Steckteil 1 am Aufnahmeteil 2.

Um das Steckteil sicher haltern zu können ist in den Stutzen 11 eine Bohrung 14 eingebracht, in die ein im Gehäuse 10 gehalterter Sicherungsbolzen insbesondere in Form eines Gewindestiftes 15 einschraubbar ist. Nach der Montage wird die Bohrung 14 mit Kunststoff versiegelt. Durch den Gewindestift 15 wird ein unbeabsichtigtes Abschrauben des Gehäuses 10 verhindert.

In den dem Druckschlauch zugewandten Innenrand des Gehäuses 10 ist eine Dichtringnut 16 eingebracht, in der sich ein Dichtring 9 befindet. Diese Dichtung zwischen Aufnahmeteil 2 und Steckteil 1 verhindert das Ausdringen von Schmiermittel und gleichzeitig das Eindringen von Schmutz.

Das Steckteil 1 ist innerhalb des Gehäuses 10 mit den zwei Schrägkugellagern K1 und K2 drehbar gelagert. Dabei dient es gleichzeitig als Innenring für beide Lager. In das Steckteil 1 sind zwei V-förmige Nuten 18 so eingedreht, daß die Winkelhalbierende jeder Nut die Drehachse des Steckteils 1 unter 45° schneidet. Beide Winkelhalbierenden schneiden sich unter einem rechten Winkel. In beiden Nuten 18 laufen Kugeln 19 aus Wälzlagerstahl. Beide Kugellager sind in einer sogenannten X-Anordnung zusammengestellt. Der axiale Abstand zwischen beiden Kugellagern K1 und K2 ist möglichst groß und beträgt etwa das Maß des Außendurchmessers des Hohlzapfen 4.

Der Außenring des hinteren, dem Druckschlauch zugewandten Kugellagers, wird von einer schrägen Bahn 20 gebildet, die in den Innendurchmesser des Gehäuses 10 unter 45° eingedreht ist. Der Außenring des vorderen, dem Aufnahmeteil 2 zugewandten Kugellagers wird von einem Druckring 21 gebildet. Der Druckring 21 hat den gleichen Außendurchmesser wie das Steckteil 1. Seine zentrale Bohrung ist von dem Hohlzapfen 4 durchragt. Er wird mittels zweier Tellerfedern 22, die andererseits am Stutzen 4 anliegen, gegen das Kugellager gedrückt. Dabei liegen die Kugeln 19 des vorderen Ringes an schrägen Bahnen 23 des Druckringes 21 an. Durch den mit starker Federkraft der Tellerfedern 22 beaufschlagten Druckring zentriert sich das Lager selber. Da Ausdehnungen der Bauteile aufgrund von Wärmeeinwirkung rotationssymmetrisch auftreten, ist in jedem Fall für eine automatische Zentrierung des Steckteiles im Aufnahmeteil gesorgt. Durch die besondere Anordnung der Kugellager auf einem Innenring, wird durch die Verwendung des Druckringes 21 insofern die gleichzeitige Vorspannung beider Kugellager erreicht, als der Federkraft beaufschlagte Druckring 21 beide Lager gegen die schräge Bahn 20 drückt.

Die Drehkupplung ist von einem Berührungsschutz 17 insbesondere einem zylindrisch geformten Lochblech umgeben, der am Aufnahmeteil 2 befestigt insbesondere angeschweißt ist. Durch den Berührungsschutz 17 werden die mitunter heißen Bauteile abgeschirmt, so daß eine sichere Handhabung der Drehkupplung gewährleistet ist.

Bei der Montage der Drehkupplung werden zunächst die Kugeln 19 in die Nuten 18 eingelegt und Druckring 21 und Tellerfedern 22 über den Hohlzapfen 4 geschoben. Dann wird das Gehäuse 10 mit Berührungsschutz 17 von Hinten über die Schlauchtülle 3 geführt. Nun kann der Druckschlauch mit Klemmschalenpaaren auf der Schlauchtülle 3 fetgeklemmt werden. Das Steckteil 1 läßt sich nun in das Aufnahmeteil 2 einführen und gegen den Druck der Tellerfedern 22 mit dem Gewinde 13 festschrauben. Dabei zentriert es sich selbsttätig. Wenn das Gehäuse 10 am Ansatz 12 anliegt, läßt sich der Gewindestift 15 in die Bohrung 14 eindrehen. Zuletzt wird die Bohrung 14 mit Kunststoff verschlossen.

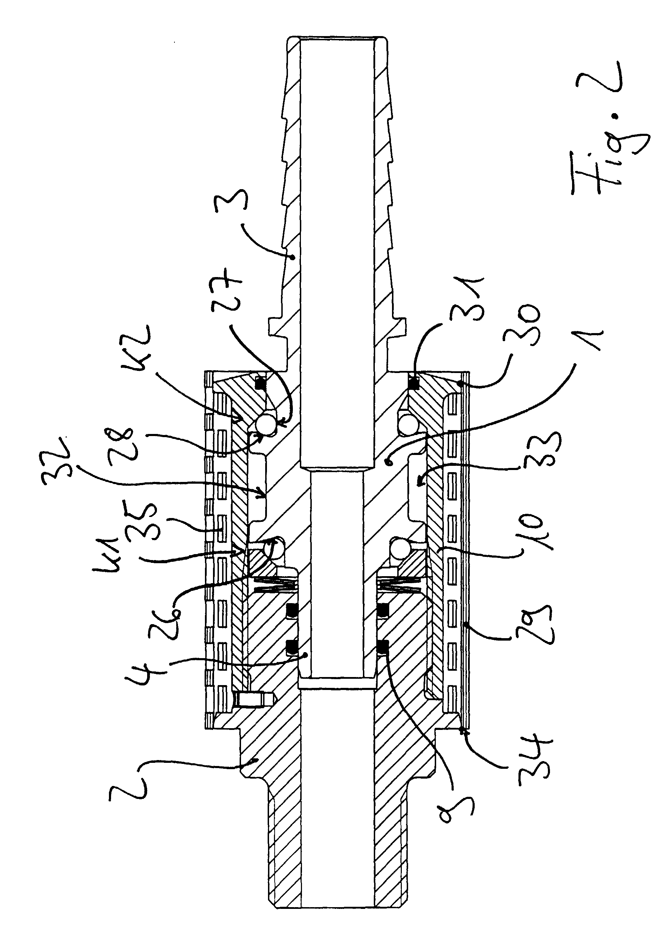

In Figur 2 ist ein Ausführungsbeispiel der Drehkupplung dargestellt, bei dem sich die Wandungen der Nuten 25 und 26 unter einem Winkel von 75° schneiden. Dabei ist die eine Wandung 27 der Nuten parallel zur Achse des Steckteiles. Die andere Wandung 28 ist um einen Winkel von 15° zur Senkrechten angestellt. Die Winkelhalbierende der Nuten schneidet die Drehachse des Steckteils 1 unter 37,5°. Der axiale Abstand zwischen beiden Kugellagern K1 und K2 beträgt etwa dem 1,5 fachen des Außendurchmessers des Hohlzapfen 4. An das Aufnahmeteil 2 ist ein Berührungsschutz 29 mit möglichst geringer Auflage an der Kante 30 des Steckteiles 1 angeschweißt. Das andere Ende des Berührungsschutzes 29 liegt auf einer schmalen Auflage 34 am Aufnahmeteil 2 auf. Die Dichtung 31, die zwischen dem Gehäuse 10 und dem Steckteil 1 eingebracht ist, verhindert einerseits den Eintritt von Verunreinigungen und sichert andererseits den Austritt von Dampf bei einer eventuellen Beschädigung der Dichtringe 9.

In der dargestellten Ausführungsform der Drehkupplung weist die Oberfläche 32 des Steckteiles 1 Ausnehmungen 33 auf, die die Oberfläche vergrößern und damit zu einer guten Wärmeabfuhr beitragen. Der Berührungsschutz weist Öffnungen 35 auf, die eine Luftzirkulation zulassen und damit zur Wärmeabfuhr beitragen.

## Patentansprüche

1. Drehkupplung für Druckleitungen mit einem Steckteil (1), das einen in ein Aufnahmeteil (2) hineinragenden und dagegen abgedichteten Hohlzapfen (4) aufweist, wobei das Steckteil von einem Gehäuse (10) umgeben ist, das an dem Aufnahmeteil befestigt ist, und mit zwei koaxial angeordneten Schrägkugellagern (K1, K2), die elastisch vorgespannt sind und einen mit dem Aufnahmeteil (2) verbundenen Außenring und einen mit dem Steckteil (1) verbundenen Innenring aufweisen, wobei die Schrägkugellager so angeordnet sind, daß die Drehachsen der Kugeln (19) innerhalb der Drehkupplung sich schneiden, d.h. X-Anordnung, **dadurch gekennzeichnet**, daß der Außenring des dem Aufnahmeteil (2) abgewandten Kugellagers eine in das Gehäuse (10) eingedrehte schräge Bahn (20) ist und daß das Gehäuse (10) mit seiner dem Hohlzapfen (4) abgewandten Seite das Steckteil (1) mit der Lagerung aufnimmt un am Aufnahmeteil (2) haltert, sodaß das Steckteil (1) nicht aus dem Aufnahmeteil (2) rutschen kann.

2. Drehkupplung nach Anspruch 1,
**dadurch gekennzeichnet**, daß die Vorspannung der Schrägkugellager von einem kraftbeaufschlagten Druckring (21) erzeugt wird, der koaxial zum Aufnahmeteil (2) mit einer zentralen Bohrung auf dem Hohlzapfen (4) aufgeschoben ist.

3. Drehkupplung nach Anspruch 1 oder 2,
**dadurch gekennzeichnet**, daß die beiden Schrägkugellager einen gemeinsamen Innenring haben.

4. Drehkupplung nach Anspruch 3,
**dadurch gekennzeichnet**, daß der gemeinsame Innenring einstückig mit dem Steckteil (1) verbunden ist.

5. Drehkupplung nach Anspruch 3 und 4,
**dadurch gekennzeichnet**, daß die Breite des gemeinsamen Innenrings etwa dem Außendurchmesser des Hohlzapfens (4) entspricht.

6. Drehkupplung nach einem der vorherigen Ansprüche,
**dadurch gekennzeichnet**, daß in den Innenring Auflageflächen in Form von Nuten (18) für Kugeln (19) eingebracht sind, ein V-förmiges Profil aufweisen.

7. Drehkupplung nach einem der vorherigen Ansprüche,
**dadurch gekennzeichnet**, daß auf das Aufnahmeteil (2) das Gehäuse (10) koaxial aufgeschoben und mit einem Gewindestift (15) gesichert ist.

8. Drehkupplung nach einem der vorherigen Ansprüche,
**dadurch gekennzeichnet**, daß im Inneneren des Gehäuses (10) ein Gewinde (13) ist, mit dem das Gehäuse auf einem Stutzen (11) des Aufnahmeteils (2) aufgeschraubt ist.

9. Drehkupplung nach einem der vorherigen Ansprüche,
**dadurch gekennzeichnet**, daß der Außenring des dem Aufnahmeteil zugewandten Kugellagers der Druckring (21) ist.

10. Drehkupplung nach einem der Ansprüche 2 - 9,
**dadurch gekennzeichnet**, daß zwischen dem Steckteil (1) und dem Druckring (21) mindestens eine ringförmige Tellerfeder (22) auf den Hohlzapfen (11) aufgeschoben ist.

11. Drehkupplung nach Anspruch 10
**dadurch gekennzeichnet**, daß der Federdruck der Tellerfeder (22) über den Druckring (21) von dem Kugellager (K1) auf das Kugellager (K2) übertragbar ist.

12. Drehkupplung nach einem der vorherigen Ansprüche,
**dadurch gekennzeichnet**, daß das Steckteil (1) mit einer Schlauchtülle (3) versehen ist, auf die der Druckschlauch aufschiebbar ist.

13. Drehkupplung nach einem der vorherigen Ansprüche,
**dadurch gekennzeichnet**, daß das Gehäuse (10) von einem Berührungsschutz (17) insbesondere von einem Lochblech umgeben ist.

14. Drehkupplung nach einem der vorherigen Ansprüche,
**dadurch gekennzeichnet**, daß der Hohlzapfen (4) in eine Bohrung (7) im Aufnahmeteil (2) hineinragt in der Nuten (8) zur Aufnahme von Dichtungsringen (9) vorgesehen sind.

15. Drehkupplung nach einem der vorherigen Ansprüche,
**dadurch gekennzeichnet**, daß sich an der dem Druckschlauch zugewandten Seite des Gehäuses (10) ein Dichtungsring (9) zwischen dem Steckteil und dem Gehäuse (10) befindet, der in einer Nut (16) im Gehäuse geführt ist.

16. Drehkupplung nach einem der vorherigen Ansprüche,
**dadurch gekennzeichnet**, daß die Oberfläche (32) des Steckteiles (1) Ausnehmungen aufweist, über die die Hitze abgeführt wird.

## Claims

1. A rotating joint for pressure lines, having: an insertion member (1) having a hollow pin (4) extending into a receiving member (2) and sealed thereagainst, the insertion member being enclosed by a casing (10) which is attached to the receiving member; and two coaxially disposed angular contact ball bearings (K1, K2) which are resiliently prestressed and have an outer raceway connected to the receiving member (2) and an inner raceway connected to the insertion member (1), the angular contact ball bearings being so disposed that the axes of rotation of the balls (19) intersect one another inside the rotating joint - i.e., in X arrangement,
**characterised in that** the outer raceway of the ball bearing remote from the receiving member (2) is an inclined track (20) recessed into the casing (10), and by its side remote from the hollow pin (4) the casing receives the insertion member (1) with the bearing and retains the insertion member on the receiving member (2), so that the insertion member (1) cannot slip out of the receiving member (2).

2. A rotating joint according to claim 1,
**characterised in that** prestressing of the angular contact ball bearings is generated by a force-experiencing thrust ring (21) which is slipped on to the hollow pin (4) via a central bore coaxially with the receiving member (2).

3. A rotating joint according to claims 1 or 2,
**characterised in that** the two angular contact ball bearings have a common inner raceway.

4. A rotating joint according to claim 3,
**characterised in that** the common inner raceway is connected unitarily to the insertion member (1).

5. A rotating joint according to claims 3 and 4,
**characterised in that** the width of the common inner raceway corresponds substantially to the external diameter of the hollow pin.

6. A rotating joint according to one of the preceding claims,
**characterised in that** bearing surfaces in the form of grooves (18) for balls (19) with which the inner raceway is formed have a V-shaped section.

7. A rotating joint according to one of the preceding claims,
**characterised in that** the casing (1) is coaxially slipped on to the receiving member (2) and secured by a screw threaded pin (15).

8. A rotating joint according to one of the preceding claims,
**characterised in that** the inside of the casing (10) is formed with a screw threading (13) via which the casing is screwed on to a spigot (11) of the receiving member (2).

9. A rotating joint according to one of the preceding claims,
**characterised in that** the outer raceway of the ball bearing adjacent the receiving member is the thrust ring (21).

10. A rotating joint according to one of claims 2-9,
**characterised in that** at least one annular cup spring (22) is slipped on to the hollow pin (4) between the insertion member (1) and the thrust ring (21).

11. A rotating joint according to claim 10,
**characterised in that** the spring pressure of the cup spring (22) can be transmitted via the thrust ring (21) from the ball bearing (K1) to the ball bearing (K2).

12. A rotating joint according to one of the preceding claims,
**characterised in that** the insertion member (1) is provided with a hose nozzle (3) on to which the delivery hose can be slipped.

13. A rotating joint according to one of the preceding claims,
**characterised in that** the casing (10) is enclosed with a contact safety device (17), more particularly a perforated plate.

14. A rotating joint according to one of the preceding claims,
**characterised in that** the hollow pin (4) extends into a bore (7) in the receiving member (2) with which grooves (8) are formed for the reception of sealing ring washers (9).

15. A rotating joint according to one of the preceding claims,
**characterised in that** disposed on the side of the casing (10) adjacent the delivery hose between the insertion member and the casing (10) is a sealing ring washer (9) which is guided in a groove (16).

16. A rotating joint according to one of the preceding claims,
**characterised in that** the surface (32) of the insertion member (1) is formed with recesses via which the heat is dissipated.

## Revendications

1. Raccord tournant pour conduites de pression avec une douille (1), qui présente un tenon (4) creux en saillie dans un support (2) et étanché par rapport à celui-ci, la douille étant entourée par un boîtier (10) qui est fixé au support, et avec deux roulements à billes à contact oblique (K1, K2) disposés coaxialement, qui sont précontraints élastiquement et présentent une bague externe reliée au support (2) et une bague interne reliée à la douille (1), les roulements à billes à contact oblique étant disposés de telle manière que les axes de rotation des billes (19) se coupent à l'intérieur du raccord tournant, c'est-à-dire une disposition en X,
caractérisé en ce que la bague extérieure du roulement à billes écarté du support (2) est un siège (20) oblique tourné dans le boîtier (10) et que le boîtier (10) loge, par sa face écartée du tenon (4) creux, la douille (1) avec le logement et la fixe au support (2), de telle sorte que la douille (1) ne peut pas glisser hors du support (2).

2. Raccord tournant selon la revendication 1,
caractérisé en ce que la précontrainte des roulements à billes à contact oblique est produite par une bague de pression (21) soumise à une force, qui est glissée coaxialement au support (2), par un perçage central, sur le tenon (4) creux.

3. Raccord tournant selon la revendication 1 ou 2,
caractérisé en ce que les deux roulements à billes à contact oblique ont une bague interne commune.

4. Raccord tournant selon la revendication 3,
caractérisé en ce que la bague interne commune est reliée d'une seule pièce à la douille (1).

5. Raccord tournant selon la revendication 3 ou 4,
caractérisé en ce que la largeur de la bague interne commune correspond sensiblement au diamètre externe du tenon (4) creux.

6. Raccord tournant selon l'une des revendications précédentes,
caractérisé en ce que des surfaces d'appui, en forme de gorges (18), pour des billes (19), sont ménagées dans la bague interne et présentent un profil en forme de V.

7. Raccord tournant selon l'une des revendications précédentes,
caractérisé en ce que le boîtier (10) est glissé coaxialement sur le support (2) et est bloqué par une broche filetée (15).

8. Raccord tournant selon l'une des revendications précédentes,
caractérisé en ce que, à l'intérieur du boîtier (10), se trouve un filetage (13) par lequel le boîtier est vissé sur un manchon (11) du support (2).

9. Raccord tournant selon l'une des revendications précédentes,
caractérisé en ce que la bague externe du roulement à billes tourné vers le support est la bague de pression (21).

10. Raccord tournant selon l'une des revendications 2 à 9,
caractérisé en ce qu'au moins une rondelle-ressort (22) annulaire est glissée sur le tenon creux (11) entre la douille (1) et la bague de pression (21).

11. Raccord tournant selon la revendication 10,
caractérisé en ce que la pression de ressort de la rondelle-ressort (22) peut être transmise du roulement à billes (K1) au roulement à billes (K2) par l'intermédiaire de la bague de pression (21).

12. Raccord tournant selon l'une des revendications précédentes,
caractérisé en ce que la douille (1) est munie d'un embout à olive (3) sur lequel peut être enfoncé le tuyau de pression.

13. Raccord tournant selon l'une des revendications précédentes,
caractérisé en ce que le boîtier (10) est entouré par une protection contre les contacts accidentels (13), en particulier par une tôle perforée.

14. Raccord tournant selon l'une des revendications précédentes,
caractérisé en ce que le tenon (4) creux fait saillie intérieurement dans un alésage (7) dans le support (2), dans lequel sont ménagées des rainures (8) pour loger des bagues d'étanchéité (9).

15. Raccord tournant selon l'une des revendications précédentes,
caractérisé en ce qu'une bague d'étanchéité (9), qui est guidée dans une rainure (16) dans le boîtier, se trouve sur le côté du boîtier (10) tourné vers le tuyau de pression, entre la douille et le boîtier (10).

16. Raccord tournant selon l'une des revendications précédentes,
caractérisé en ce que la surface (32) de la douille (1) présente des évidements par lesquels la chaleur est évacuée.
